## Europäisches Patentamt

## European Patent Office

## Office européen des brevets

(11) Veröffentlichungsnummer: **0 129 815**
**B1**

(12)
# EUROPÄISCHE PATENTSCHRIFT

(45) Veröffentlichungstag der Patentschrift:
08.03.89

(21) Anmeldenummer: 84106933.9

(22) Anmeldetag: 16.06.84

(51) Int. Cl.⁴: **C 08 L 25/12, C 08 L 25/16, C 08 L 51/04**

(54) Thermoplastische Formmasse.

(30) Priorität: 24.06.83 DE 3322747

(43) Veröffentlichungstag der Anmeldung:
02.01.85 Patentblatt 85/1

(45) Bekanntmachung des Hinweises auf die Patenterteilung:
08.03.89 Patentblatt 89/10

(84) Benannte Vertragsstaaten:
BE DE FR GB NL

(56) Entgegenhaltungen:
US-A-3 449 470
US-A-4 169 869

(73) Patentinhaber: BASF Aktiengesellschaft, Carl-Bosch- Strasse 38, D-6700 Ludwigshafen (DE)

(72) Erfinder: Mitulla, Konrad, Dr., An der Froschlache 23, D-6700 Ludwigshafen (DE)
Erfinder: Swoboda, Johann, Dr., Neuwiesenstrasse 28, D-6700 Ludwigshafen (DE)
Erfinder: Echte, Adolf, Dr., Leuschnerstrasse 42, D-6700 Ludwigshafen (DE)
Erfinder: Ruppmich, Karl, Koenigsbacher Strasse 134, D-6700 Ludwigshafen (DE)
Erfinder: Siebel, Peter, Dr., Trifelsring 20, D-6703 Limburgerhof (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine thermoplastische Formmasse aus einem schlagfesten Harz, insbesondere einem ABS-Polymerisat, und einem Nitrilkautschuk.

Zum Stand der Techik nennen wir:

(1) US-PS-3 449 470 und
(2) US-PS-4 169 869.

Aus (1) und (2) sind thermoplastische Harze auf Basis von ABS bekannt, die beim Extrudieren Gegenstände mit matter Oberfläche liefern. In den bekannten Formmassen wird zur Erzielung der Mattigkeit der Oberfläche ein Gemisch aus zwei unterschiedlichen Kautschuken, nämlich einem Nitrilkautschuk und einem überwiegend oder ganz aus Polybutadien bestehenden Kautschuk angewendet. Die bekannten Formmassen weisen insbesondere niedrige Schlagzähigkeiten, insbesondere niedrigere Kälteschlagzähigkeiten auf und sind recht kompliziert aufgebaut.

Es bestand daher die Aufgabe, matte ABS-Harze herzustellen, die einfacher aufgebaut sind, z. B. nur einen Nitrilkautschuk benötigen, und leichter zu handhaben sind, d. h. z. B. ohne die Verwendung von Peroxid-Zusätzen auskommen.

Die Aufgabe wird gelöst durch eine Formmasse gemäß Patentanspruch 1.

Die Erfindung betrifft daher eine thermoplastische Formmasse, bestehend im wesentlichen aus

A einem schlagfesten Karz, das aufgebaut ist aus

$A_1$ mindestens einem Copolymerisat in einem Anteil von 40 bis 80 Gew.-%, bezogen auf A, aus Styrol und/oder α -Methylstyrol mit Acrylnitril, wobei dieses Copolymerisat 20 bis 40 Gew.-% Acrylnitril einpolymerisiert enthält

sowie

$A_2$ mindestens einem Pfropfmischpolymerisat in einem Anteil von 60 bis 10 Gew.-%, bezogen auf A, das Styrol und Acrylnitril im Gewichtsverhältnis von 80/20 bis 65/35 auf mindestens einen, nur aus Butadien aufgebauten, Kautschuk aufgepropft enthält, wobei der Kautschukgehalt 30 bis 95 Gew.-%, vorzugsweise 60 bis 80 Gew.-%, bezogen auf $A_2$, beträgt

und

B einem aus Acrylnitril und Butadien bestehenden Kautschuk in einem Anteil von 1 bis 20 Gew.-Teilen, bezogen auf 100 Gew.-Teile von A, der aufgebaut ist aus 5 bis 40 Gew.-% Acrylnitril und 95 bis 60 Gew.-% Butadien, jeweils bezogen auf B,

gegebenenfalls enthaltend

C übliche Zusatzstoffe

dadurch gekennzeichnet,

daß das Pfropfmischpolymerisat $A_2$ erhältlich ist, vorzugsweise erhalten wird, durch Emulsions-Polymerisation aus mindestens einem in Emulsion erzeugten Polybutadienlatex, von dem ein erster Teil $A_{21}$,

der 40 bis 90 Gew.-%, vorzugsweise 50 bis 70 Gew.-% Feststoff, bezogen auf den Feststoff des Gesamtlatex, ausmacht, agglomeriert vorliegt,

so daß

70 bis 97 % der Teilchen (Zahlenmittel) eine mittlere Teilchengröße ($d_{50}$-Wert der integralen Masseverteilung) von 0,04 bis 0,08 μm aufweisen.

und

30 bis 3 % der Teilchen (Zahlenmittel) eine mittlere Teilchengröße ($d_{50}$-Wert der integralen Masseverteilung) von 0,20 bis 0,50 μm besitzen,

getrennt von

einem zweiten Teil eines nicht agglomerierten Latex $A_{22}$,

der 60 bis 10 Gew.-%, vorzugsweise 50 bis 30 Gew.-% Feststoff, bezogen auf den Feststoff des Gesamtlatex, enthält

jeweils mit einem Monomerengemisch aus Styrol und Acrylnitril in an sich bekannter Weise in Emulsion polymerisiert (gepfropft) wird,

so daß danach der Latex

$A_{21}$ einen Pfropfgrad von 25 bis 70

und der Latex

$A_{22}$ einen Pfropfgrad von 5 bis 20

aufweisen

und wobei man danach die Latices $A_{21}$ und $A_{22}$ mischt und aus der Mischung der Latices in üblicher Weise das Pfropfmischpolymerisat $A_2$ gewinnt.

Die erfindungsgemäße Formmasse besitzt einen einfacheren Aufbau als die aus (1) oder (2) bekannten Formmassen und weist unerwartet eine höhere Kältezähigkeit und eine verbesserte Fließfähigkeit, insbesondere bei höheren Verarbeitungstemperaturen, gegenüber den bekannten Formmassen auf.

Nachstehend werden die Komponenten der erfindungsgemäßen Formmasse, deren Herstellung und die Herstellung der Formmasse beschrieben.

2

**Komponente A**

Die Komponente A repräsentiert ein schlagfestes Harz, das aus mindestens einem Copolymersat $A_1$ (Hartkomponente) und mindestens einem Pfropfmischpolymerisat $A_2$ (Weichkomponente) aufgebaut ist.

Die Komponente $A_1$ ist in einem Anteil von 40 bis 90 Gew.-%, insbesondere von 45 bis 80 Gew.-%, bezogen auf A, in der erfindungsgemäßen Formmasse vorhanden.

Die in der erfindungsgemäßen Formmasse enthaltende Komponente $A_1$ ist eine Hartkomponente aus einem oder mehreren Copolymerisaten von Styrol und/oder $\alpha$-Methylstyrol mit Acrylnitril. Der Acrylnitril-Gehalt in diesen Copolymerisaten der Hartkomponente $A_1$ beträgt 20 bis 40 Gew.-%, insbesondere 23 bis 35 Gew.-%, bezogen auf das jeweilige Copolymerisat der Hartkomponente. Zu dieser Hartkomponente $A_1$ zählen auch wie weiter unten erläutert, die bei der Pfropfmischpolymerisation zur Herstellung der Komponenten $A_2$ entstehenden freien, nicht gepfropften Styrol/Acrylnitril-Copolymerisate. Je nach den bei der Pfropfmischpolymerisation für die Herstellung der Pfropfmischpolymerisate $A_1$ gewählten Bedingungen kann es möglich sein, daß bei der Pfropfmischpolymerisation schon ein hinreichender Anteil an Hartkomponente $A_1$ gebildet worden ist. Im allgemeinen wird es jedoch nötig sein, die bei der Pfropfmischpolymerisation erhaltenen Produkte mit zusätzlicher, separat hergestellter Hartkomponente $A_1$ zu mischen.

Bei der separat hergestellten Hartkomponente $A_1$ kann es sich um ein Styrol/Acrylnitril-Copolymerisat, ein $\alpha$-Methylstyrol/Acrylnitril-Copolymerisat oder ein $\alpha$-Methylstyrol/Styrol/Acrylnitril-Terpolymerisat handeln. Diese Copolymerisate können einzeln oder auch in Mischung miteinander für die Hartkomponente eingesetzt werden, so daß es sich bei der Hartkomponente $A_1$ der erfindungsgemäßen Mischungen beispielsweise um eine Mischung aus einem Styrol-Acrylnitril-Copolymerisat und einem $\alpha$-Methylstyrol/Acrylnitril-Copolymerisat handeln kann. In dem Fall, in dem die Hartkomponente $A_1$ der erfindungsgemäßen Massen aus einer Mischung von einem Styrol/Acrylnitril-Copolymerisat und einem $\alpha$-Methylstyrol/Acrylnitril-Copolymerisat besteht, soll der Acrylnitril-Gehalt der beiden Copolymerisate tunlichst nicht mehr als 10 Gew.-%, vorzugsweise nicht mehr als 5 Gew.-%, bezogen auf das Copolymerisat, voneinander abweichen. Die Hartkomponente $A_1$ der erfindungsgemäßen Massen besteht jedoch vorzugsweise nur einem einzigen Styrol/Acrylnitril-Copolymerisat. Insbesondere dann, wenn bei den Pfropfmischpolymerisationen zur Herstellung der Komponenten $A_2$ als auch bei der Herstellung der zusätzlichen, separat hergestellten Hartkomponenten von dem gleichen Monomer-Gemisch aus Styrol und Acrylnitril ausgegangen wird.

Die Hartkomponente $A_1$ kann nach den herkömmlichen Methoden erhalten werden. So kann die Copolymerisation des Styrols und/oder $\alpha$-Methylstyrols mit dem Acrylnitril in Masse, Lösung, Suspension oder wäßriger Emulsion durchgeführt werden. Die Hartkomponente $A_1$ hat vorzugsweie eine Viskositätszahl von 40 bis 100, insbesondere von 50 bis 85 [ml/g] und ist z. B. im Handel erhältlich.

**Komponente $A_2$**

Die Komponente $A_2$ repräsentiert mindestens ein Pfropfmischpolymerisat und ist in einem Anteil von 60 bis 10 Gew.-%, insbesondere 50 bis 15 Gew.-%, bezogen auf A, in der Formmasse vorhanden. Sie enthält als Pfropfgrundlage Polybutadien und ferner ein S/AN-Copolymerisat als Pfropfreis. Sie ist aufgebaut aus 30 bis 95 Gew.-%, vorzugsweise 60 bis 80 Gew.-% Polybutadien, und 70 bis 5 Gew.-% des Copolymerisates, jeweils bezogen auf $A_2$.

Die Herstellung des erfindungsgemäßen einzusetzenden Pfropfmischpolymerisats $A_2$ erfolgt in zwei Stufen. Hierzu wird zunächst die Pfropfgrundlage, das Polybutadien, hergestellt.

Zunächst wird ein Kautschuklatex auf herkömmliche Weise hergestellt. Der Grundkautschuk ist durch seine Glastemperatur definiert, die unterhalb von -40°C, vorzugsweise unterhalb von -60°C liegen soll.

Die Polymerisation wird, wie üblich, bei Temperaturen zwischen 30 und 90°C durchgeführt. Sie erfolgt in Gegenwart von Emulgatoren, wie Alkalisalzen von Alkyl- oder Alkylarylsulfonaten, Alkylsulfaten, Fettalkoholsulfonaten oder Fettsäuren mit 10 bis 30 Kohlenstoffatomen; vorzugsweise nimmt man Natriumsalze von Alkylsulfonaten oder Fettsäuren mit 12 bis 18 Kohlenstoffatomen. Die Emulgatoren werden in Mengen von 0,3 bis 5, insbesondere von 0,5 bis 2,0 Gew.-%, bezogen auf das Monomere, verwendet. Es werden die üblichen Puffersalze, wie Natriumbicarbonat und Natriumpyrophosphat, verwendet.

Ebenso werden die üblichen Initiatoren, wie Persulfate, oder organische Peroxide mit Reduktionsmitteln verwendet, sowie gegebenenfalls Molekulargewichtsregler, wie Mercaptane, Terpene, oder dimeres $\alpha$-Methylstyrol, die am Anfang oder während der Polymerisation zugegeben werden. Das Gewichtsverhältnis Wasser zu Monomeres liegt vorzugsweise zwischen 2 : 1 und 1 : 1. Die Polymerisation wird so lange fortgesetzt, bis mehr als 90 %, vorzugsweise mehr als 96 % des Monomere polymerisiert sind. Dieser Umsatz ist im allgemeinen nach 4 bis 20 Stunden erreicht. Der dabei erhaltene Kautschuklatex hat eine Teilchengröße, die unterhalb von 0,10 µm, vorzugsweise von 0,04 bis 0,08 µm, liegt. Die Teilchengrößenverteilung solcher Kautschuklatices ist verhältnismäßig eng, so daß man von einem nahezu monodispersen System sprechen kann.

Die Gesamtmenge des Kautschuklatex wird nun in einen ersten Teil $A_{21}$, der 40 bis 90 Gew.-%, vorzugsweise 50 bis 70 Gew.-% Feststoff enthält und in einen zweiten Teil, $A_{22}$, aufgeteilt, der 60 bis 10 Gew.-%, vorzugsweise 50 bis 30 Gew.-% Feststoff, jeweils bezogen auf den Feststoff der gesamten Latexmenge enthält. Falls mehrere Reaktoren zur Verfügung stehen, können auch die agglomerierten Latices $A_{21}$ und $A_{22}$ separat hergestellt werden.

In einem weiteren Verfahrensschritt wird nun der Teil des Kautschuklatex, $A_{21}$, agglomeriert. Dies geschieht z. B. durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Ethylacrylat, mit 0,1 bis 10 Gew.-% wasserlösliche Polymerisate bildenden Monomere, wie Acrylsäure, Methacrylsäure, Arylamid oder Methacrylamid, N-Methylolmethacrylamid oder N-Vinylpyrrolidon, eingesetzt. Besonders bevorzugt ist ein Copolymerisat aus 96 % Ethylacrylat und 4 % Methacrylamid. Die Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.-% liegen. Bei der Agglomeration werden 0,2 bis 10, vorzugsweise 1 bis 5, Gewichtsteile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90° C, vorzugsweise zwischen 30 und 75° C.

Unter den genannten Bedingungen wird nur ein Teil der Kautschukteilchen agglomeriert, so daß eine bimodale Verteilung entsteht. Dabei liegen nach der Agglomeration im allgemeinen mehr als 50, vorzugsweise von 70 bis 97 % der Teilchen (Zahlen-Verteilung) im nicht agglomerierten Zustand vor. Der mittlere Durchmesser der Kautschukteilchen liegt von 0,20 bis 0,5 µm ($d_{50}$-Wert der integralen Masseverteilung), vorzugsweise von 0,26 bis 0,35 µm - 30 bis 3 % (Zahlenmittel) der Teilchen sind somit agglomeriert. Der erhaltene agglomerierte Kautschuklatex ist verhältnismäßig stabil, so daß er ohne weiteres gelagert und transportiert werden kann, ohne daß Koagulation eintritt.

Wesentlich ist jedoch, daß die nachfolgende Pfropfung der Teile $A_{21}$ und $A_{22}$ unter unterschiedlichen Bedingungen so geführt wird, daß im Falle des

Latex $A_{21}$ ein Pfropfgrad von 25 bis 70, insbesondere von 30 bis 50
und im Falle des
Latex $A_{22}$ ein Pfropfgrad von 5 bis 20, insbesondere von 7 bis 15
resultiert.

Unter dem Pfropfgrad im Sinne der vorliegenden Erfindung ist der Anteil der Pfropfhülle in Gew.-% am Pfropfmischpolymerisat zu verstehen. Ein Pfropfgrad von z. B. 30 bedeutet, daß 70 Gew.-% an Kautschuk als Pfropfgrundlage vorliegen.

Nach der Durchführung der Pfropfung, die nachfolgend allgemein beschrieben wird, werden die aus den Teilen $A_{21}$ und $A_{22}$ des agglomerierten Latex gewonnenen Pfropfmischpolymerisatdispersionen vereinigt. Aus der Mischung wird dann in üblicher Weise durch Koagulation, Fällung und Sinterung das Pfropfmischpolymerisat $A_{21}$ gewonnen.

Wesentlich für die erfindungsgemäße Formmasse ist, daß das Pfropfmischpolymerisat 2 unterschiedlich stark gepfropfte Anteile $A_{21}$ (starke Pfropfung) und $A_{22}$ (schwache Pfropfung) besonders, bevorzugt in unterschiedlichen Gewichtsanteilen, enthält.

Somit wird zur Herstellung des Pfropfmischpolymerisates $A_2$ in einem zweiten Schritt in Gegenwart der beiden Teile der $A_{21}$ und $A_{22}$ Latices des Butadien-Polymerisats jeweils separat ein Monomeren-Gemisch aus Styrol und Acrylnitril polymerisiert, wobei das Gewichtsverhältnis von Styrol zu Acrylnitril in dem Monomeren-Gemisch im Bereich von 75 : 25 bis 65 : 35, vorzugsweise bei 70 : 30, liegen soll. Es ist vorteilhaft, diese Pfropfmischpolymerisation von Styrol und Acrylnitril auf das als Pfropfgrundlage dienende Butadien-Polymerisat wieder in wäßriger Emulsion unter den üblichen, oben aufgeführten Bedingungen durchzuführen. Die Pfropfmischpolymerisation kann zweckmäßig im gleichen System erfolgen wie die Emulsionspolymerisation zur Herstellung der Pfropfgrundlage, wobei, falls notwendig, weiterer Emulgator und Initiator zugegeben werden kann. Das aufzupfropfende Monomeren-Gemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol und Acrylnitril in Gegenwart des Butadien-Polymerisats wird so geführt, daß die genannten Pfropfgrade resultieren. Da die Pfropfausbeute bei der Pfropfmischpolymerisation nicht 100 %-ig ist, muß eine etwas größere Menge des Monomeren-Gemisches aus Styrol und Acrylnitril bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats ist jedem Fachmann geläufig und kann beispielsweise u. a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfmischpolymerisation entstehen im allgemeinen etwa 5 bis 15 Gew.-%, bezogen auf das Pfropfmisch-Copolymerisat. Der Anteil des Pfropfmischpolymerisates $A_2$ in dem bei der Pfropfmischpolymerisation erhaltenen Polymerisationsprodukt wird nach der weiter unten angegebenen Methode ermittelt.

Die Herstellung derartiger Polymerisate durch Agglomeration wird beispielsweise in der DE-AS-2 427 960 beschrieben. Die erforderliche Teilchengröße von 0,20 bis 0,5 µm kann jedoch auch ohne Agglomeration auf dem Fachmann bekannte Weise erzeugt werden (Saalatexfahrweise etc.; vgl. den in der DE-AS-2 427 960 beschriebenen Stand der Technik).

# EP 0 129 815 B1

**Komponente B**

Die Komponente B ist in einem Anteil von 1 bis 20 Gew.-Teilen, vorzugsweise 1,5 bis 15 Gew.-Teilen, und insbesondere 2 bis 10 Gew.-Teilen, jeweils bezogen auf 100 Gew.-Teile von A, in der Formmasse vorhanden.

Als Komponente B kommen übliche Nitrilkautschuke in Betracht, die 5 bis 35 Gew.-%, insbesondere 15 bis 30 Gew.-% Acrylnitril (Rest Butadien) aufweisen. Die Herstellung derartiger AN-Bu-Copolymerisate (Nitrilkautschuke) kann in Emulsion oder Masse erfolgen und ist dem Fachmann bekannt. Als Plastizitätsmaß diente die Mooney-Viskosität nach ASTM D 1646 - 81. Die anzuwendenden Nitrilkautschuke können Mooney-Viskositäten, gemessen bei 100°C, von 15 bis 130, insbesondere von 45 bis 100, aufweisen.

Die Herstellung derartiger Kautschuke in Emulsion ist in der US-PS-3 449 470 beschrieben. Ansonsten sind zahlreiche Produkte im Handel erhältlich.

**Komponente C**

Die erfindungsgemäße Formmasse aus den Komponenten A und B kann als weitere Komponente C Zusatzstoffe enthalten, die für die Ausrüstung von ABS-Polymerisate üblich sind. Als solche Zusatzstoffe seien beispielsweise genannt: Füllstoffe, Farbstoffe oder Pigmente, Antistatika, Antioxidantien, Flammschutzmittel und Schmiermittel. Die Zusatzstoffe werden in wirksamen Mengen, vorzugsweise in Mengen von 0,1 bis zu insgesamt etwa 30 Gew.-%, bezogen auf 100 Gew.-Teile der Komponente A, eingesetzt.

**Herstellung der erfindungsgemäßen Formmasse:**

Die Mischung der Hartkomponente $A_1$ mit dem bei der Pfropfmischpolymerisation erhaltenen Produkt $A_2$ zu der erfindungsgemäßen Formmasse kann so vorgenommen werden, daß ein Teil der Hartkomponente $A_1$ zunächst mit Komponente B (gegebenenfalls mit C), und der restliche Teil der Hartkomponente $A_1$ zunächst mit der Komponente $A_2$ gemischt wird, worauf anschließend die beiden Teilmischungen $A_1$ + B) und ($A_2$ + B) zusammengegeben und vermischt werden. Es ist aber auch möglich, zunächst die Komponenten $A_2$ und B zu vermischen und in dieses Gemisch anschließend die separat hergestellte Hartkomponente $A_1$ einzumischen, wobei auch die Reihenfolge umgekehrt werden kann.

Das Mischen der Komponenten $A_1$, $A_2$ und B kann nach allen bekannten Methoden erfolgen. Vorzugsweise geschieht jedoch das Mischen der Komponenten $A_1$, $A_2$ und B durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation [Komponente $A_2$] können aber auch teilweise entwässert oder direkt als Dispersion mit der Hartmatrix $A_1$ und dem Nitrilkautschuk (Komponente B), vermischt werden, wobei dann während der Vermischung die vollständige Trocknung des Pfropfmischpolymerisats erfolgt.

Die Herstellung der Formmassen gemäß Erfindung erfolgt z. B. bevorzugt dadurch, daß eine Schmelze der Komponente $A_1$ und des Nitrilkautschuks B mit dem Pfropfmischpolymerisat $A_2$ bei Temperaturen über 200°C intensiv vermischt wird. Sie kann insbesondere dadurch erfolgen, daß man eine Schmelze der Polymerisate $A_1$ und $B_2$ mit einem gefällten Pfropfmischpolymerisat $A_2$, das einen Restwassergehalt von 10 bis 40 Gew.-% aufweist, bei Temperaturen über 180°C intensiv vermischt, oder daß man die Schmelze aus $A_1$ und B mit einer Dispersion des Pfropfkautschuks $A_2$, die ein Feststoffgehalt von 40 bis 70 Gew.-% aufweist, bei Temperaturen über 180°C intensiv vermischt.

Die erfindungsgemäßen Formmassen lassen sich nach den für die Thermoplastverarbeitung üblichen Verfahren, wie Extrusion-und Spritzgießen, zu den verschiedenartigsten geformten Gebilden, wie Gehäuse für Haushaltsgeräte, Telefone, Platten, Rohre und Kinderspielzeug verarbeiten. Wie erwähnt, eignen sich die erfindungsgemäßen Massen insbesondere da, wo mattes Aussehen erwünscht ist, z. B. im Automobilbau für Kofferraumauskleidungen, Armaturenteile, Belüftungssysteme etc.

Die in den Beispielen und Vergleichsversuchen aufgeführten Produkteigenschaften wurden wie folgt gemessen:

1. Die mittlere Teilchengröße wurde aus der integralen Massenverteilung durch Ultrazentrifugen-Messung bestimmt (W. Scholtan, H. Lange Kolloid Z, und Z. Polymere 250 (1970) 782 bis 796. Unter mittlerer Teilchengröße wird dabei immer der $d_{50}$-Wert der integralen Masseverteilung verstanden.

2. Das Zahlenmittel wird nach Kontrastierung mit $OsO_4$ anhand von Elmi-Aufnahmen bestimmt.

3. Die Ermittlung des Polybutadiengehaltes der Komponente A, bzw. der Pfropfausbeute, und somit des Anteils des Pfropfmischpolymerisats in dem bei der Pfropfmischpolymerisation erhaltenen Produkt erfolgte durch Extraktion dieses Polymerisationsproduktes $A_2$ mit Methylethylketon bei 25°C oder durch Extraktion der fertigen Formmasse, wobei die Hartkomponente A1 und die Komponente B gelöst werden. Danach ergibt sich der Pfropfgrad der Pfropfmischpolymerisate, d. h. der prozentuale Anteil vom im Pfropfmischpolymerisat enthaltenen gepfropften Styrol und Acrylnitril, am einfachsten aus der elementaranalytischen Bestimmung von Stickstoff (aus Acrylnitril) und Sauerstoff (aus Acrylester) im Methylethylketon unlöslichen Gel.

5

EP 0 129 815 B1

4. Die Viskositätszahl der Kartkomponente $A_1$ wird bei 25°C in 0,5 %-iger Dimethylformamidlösung gemessen.

5. Die Mooneyviskosität $ML_4$ der Komponente B wird bei 100°C nach ASTM D 16 46 - 81 gemessen.

6. Die Kerbschlagzähigkeit der Massen wurde nach DIN 53 453 an gespritzten Normkleinstäben bei 23°C ermittelt. Die Spritztemperatur für die Normkleinstäbe betrug dabei 250°C.

7. Die Bestimmung der Mattigkeit erfolgte auf dem Lange-Photometer, Typ LMG 014 mit ,dem 45°C-Meßkopf. Kenngröße ist die Reflexion des sichtbaren Lichtes in [%] an der Oberfläche spritzgegossener Platten im Vergleich zu einem weißen Fließpapierstandard mit der willkürlichen Zuordnung 0 % Reflexion.

Zur Herstellung erfindungsgemäßer Formmassen wurden die folgenden Komponenten verwendet:

Hartkomponente $A_1$

Durch kontinuierliche Lösungspolymerisation nach einem Verfahren wie es beispielsweise im Kunststoff-Handbuch, Vieweg-Daumiller, Band V, (Polystyrol), Carl Hanser-Verlag, München 1969, Seite 124, Zeilen 12 ff beschrieben ist, wird ein Copolymerisat, das 65 Teile Styrol und 35 Teile Acrylnitril einpolymerisiert enthält, hergestellt (VZ = 80 ml/g).

Pfropfmischpolymerisat $A_2$

Durch Polymerisation von 27 Teilen Butadien in Gegenwart einer Lösung von 0,135 Teilen tert.-Dodecylmercaptan, 0,189 Teilen $K-C_{14}-C_{18}$-Alkylsulfonat als Emulgator, 0,05 Teilen Kaliumperoxodisulfat und 0,05 Teilen Natriumpyrophosphat in 80 Teilen Wasser wird bei 65°C ein Polybutadienlatex hergestellt. Nach Beendigung der Reaktion wird der Polymerisationsautoklav entspannt. Der Umsatz betrug 98 %.

Es wurde ein Polybutadienlatex erhalten, dessen mittlere Teilchengröße $d_{50}$-Wert bei 0,08 μm liegt. Dieser Latex wurde in den, in der Tabelle aufgeführten Teile $A_{21}$ und $A_{22}$, bezogen auf Feststoff des Gesamtlatex aufgeteilt und danach wird der Latex $A_{21}$ durch Zusatz von 4 Gew.-%, bezogen auf Butadien einer Emulsion, eines Copolymeren aus 96 Teilen Ethylacrylat und 4 Teilen Acrylsäureamid mit einem Feststoffgehalt von 10 Gew.-Teilen agglomeriert, wobei ein Polybutadienlatex mit einer mittleren Teilchengröße von 0,24 μm entstand. 80 % der Teilchen (Zahlenmittel) lagen dabei im nichtagglomerierten Zustand vor (Rest agglomeriert). Danach wurden der unagglomerierte Latex $A_{22}$ und der agglomerierte Latex $A_{21}$ getrennt mit den in der Tabelle angegebenen Pfropfgraden mit Styrol und Acrylnitril im Verhältnis 70 : 30 nach üblicher Rezeptur gepfropft.

Komponente B

Als Acrylnitrilkautschuk wurde ein Handelsprodukt mit 30 Gew.-% AN und einer Mooney-Viskosität $ML_4$ von 50 verwendet.

Die Erfindung wird durch die nachfolgenden Beispiele näher erläutert. Die in den Beispielen genannten Teile und Prozente beziehen sich, sofern nicht anders angegeben, auf das Gewicht.

Beispiele 1 bis 6 und Vergleichsversuch

Aus den in der Tabelle genannten Mengen der Hartkomponente $A_1$, des Pfropfmischpolymerisates $A_2$, des Kautschukes B und 0,2 Teilen eines phenolischen Antioxidans wird auf einem Mischextruder eine Granulatmischung hergestellt. In der Tabelle sind auch die in den genannten Mischungen gemessenen mechanischen und optischen Eigenschaften angeführt.

Aus dem Vergleich der Werte geht hervor, daß die beanspruchten Formmassen mit Glanzwerten unterhalb von 60 % eine mattere Oberfläche aufweisen und auch besser fließen.

**Tabelle**

| $A_2$ | | | | | B | $A_1$ | Fließfähigkeit | Kerbschlag-zähigkeit | Glanz |
| | $A_{21}$ | | $A_{22}$ | | | | | | |
| PG | Teile | PG | Teile | Teile | Teile | | MFI g/10' | bei Raumtemp kJ/·$m^{-2}$ | %. |
|---|---|---|---|---|---|---|---|---|---|
| 60 | 27 | - | - | - | 55 | | 3,5 | 20 | 60 | Vergleichsversuch |
| 60 | 13,5 | 5 | 6,75 | 6,75 | 64 | | 7,5 | 20 | 15 | Beispiel 1 |
| 60 | 18 | 5 | 3,5 | 3,5 | 62,8 | | 8,0 | 22 | 20 | Beispiel 2 |
| 60 | 13,5 | 10 | 6,75 | 6,75 | 63,75 | | 6,4 | 24 | 20 | Beispiel 3 |
| 60 | 18 | 10 | 3,5 | 3,5 | 62,6 | | 6,1 | 21 | 25 | Beispiel 4 |
| 60 | 13,5 | 15 | 6,75 | 6,75 | 63,35 | | 7,7 | 23 | 20 | Beispiel 5 |
| 60 | 18 | 15 | 3,5 | 3,5 | 62,4 | | 7,9 | 21 | 24 | Beispiel 6 |

**Patentansprüche**

1. Termoplastische Formmasse, bestehend aus

A einem schlagfesten Harz, das aufgebaut ist aus

$A_1$ mindestens einem Copolymerisat in einem Anteil von 40 bis 90 Gew.-%, bezogen auf A, aus Styrol und/oder α-Methylstyrol mit Acrylnitril, wobei dieses Copolymerisat 20 bis 40 Gew.-% Acrylnitril

6

einpolymerisiert enthält

sowie

A2 mindestens einem Pfropfmischpolymerisat in einem Anteil von 60 bis 10 Gew.-%, bezogen auf A, das Styrol und Acrylnitril im Gewichtsverhältnis von 80/20 bis 65/35 auf mindestens einen, nur aus Butadien aufgebauten, Kautschuk aufgepfropft enthält, wobei der Kautschukgehalt 30 bis 95 Gew.-%, bei zogen auf A2, beträgt

und

B einem aus Acrylnitril und Butadien bestehenden Kautschuk in einem steil von 1 bis 20 Gew.-Teilen, bezogen auf 100 Gew.-Teile von A, der aufgebaut ist aus 5 bis 40 Gew.-% Acrylnitril und 95 bis 60 Gew.-% Butadien, jeweils bezogen auf B,

gegebenenfalls enthaltend

C übliche Zusatzstoffe,

dadurch gekennzeichnet, daß das Pfropfmischpolymerisat A2 erhältlich ist aus mindestens einem in Emulsion gewonnenen Polybutadienlatex,

von dem ein erster Teil, A21,

der 40 bis 90 Gew.-%, bezogen auf den Feststoff des Gesamtlatex, ausmacht, agglomeriert vorliegt,

so daß

70 bis 97 % der Teilchen (Zahlenmittel) eine mittlere Teilchengröße ($d_{50}$-Wert der integralen Masseverteilung) von 0,04 bis 0,08 µm aufweisen

und

30 bis 3 % der Teilchen (Zahlenmittel) eine mittlere Teilchengröße ($d_{50}$-Wert der integralen Masseverteilung) von 0,20 bis 0,50 µm besitzen,

getrennt von

einem zweiten Teil eines nicht agglomerierten Latex A22,

der 60 bis 10 Gew.-% Feststoff, bezogen auf den Feststoff des Gesamtlatex, ausmacht,

jeweils mit einem Monomerengemisch aus Styrol und Acrylnitril in an sich bekannter Weise in Emulsion polymerisiert (gepfropft) wird,

so daß danach der Latex

A21 einen Pfropfgrad von 25 bis 70

und der Latex

A22 einen Pfropfgrad von 5 bis 20

aufweisen

und wobei man danach die Latices A21 und A22 mischt und aus der Mischung der Latices in üblicher Weise das Pfropfmischpolymerisat A2 gewinnt.

2. Thermoplastische Formmasse, bestehend aus

A einem schlagfesten Harz, das aufgebaut ist aus

A1 mindestens einem Copolymerisat in einem Anteil von 40 bis 90 Gew.-%, bezogen auf A, aus Styrol und/oder α-Methylstyrol mit Acrylnitril, wobei dieses Copolymerisat 20 bis 40 Gew.-% Acrylnitril einpolymerisiert enthält

sowie

A2 mindestens einem Pfropfmischpolymerisat in einem Anteil von 60 bis 10 Gew.-%, bezogen auf A, das Styrol und Acrylnitril im Gewichtsverhältnis von 80/20 bis 65/35 auf mindestens einen, nur aus Butadien aufgebauten, Kautschuk aufgepfropft enthält, wobei der Kautschukgehalt 60 bis 80 Gew.-%, bezogen auf A2, beträgt

und

B einem aus Acrylnitril und Butadien bestehenden Kautschuk in einem Anteil von 1 bis 20 Gew.-Teilen, bezogen auf 100 Gew.-Teile von A, der aufgebaut ist aus 5 bis 40 Gew.-% Acrylnitril und 95 bis 60 Gew.-% Butadien, jeweils bezogen auf B,

gegebenenfalls enthaltend

C übliche Zusatzstoffe,

dadurch gekennzeichnet, daß das Pfropfmischpolymerisat A2 erhalten wird aus mindestens einem in Emulsion gewonnenen Polybutadienlatex, von dem ein erster Teil A21,

der 50 bis 70 Gew.-% Feststoff, bezogen auf den Feststoff des Gesamtlatex, ausmacht, agglomeriert vorliegt, so daß

70 bis 97 % der Teilchen (Zahlenmittel) eine mittlere Teilchengröße ($d_{50}$-Wert der integralen Masseverteilung) von 0,04 bis 0,08 µm aufweisen

und

30 bis 3 % der Teilchen (Zahlenmittel) eine mittlere Teilchengröße ($d_{50}$-Wert der integralen Masseverteilung) von 0,20 bis 0,50 µm besitzen,

getrennt von

einem zweiten Teil eines nicht agglomerierten Latex A22,

der 50 bis 30 Gew.-% Feststoff, bezogen auf den Feststoff des Gesamtlatex,

enthält

jeweils mit einem Monomerengemisch aus Styrol und Acrylnitril in an sich bekannter Weise in Emulsion polymerisiert (gepfropft) wird,

7

so daß danach der Latex
$A_{21}$ einen Pfropfgrad von 25 bis 70
und der Latex
$A_{22}$ einen Pfropfgrad von 5 bis 20
aufweisen
und wobei man danach die Latcies $A_{21}$ und $A_{22}$ mischt und aus der Mischung der Latices in üblicher Weise das Pfropfmischpolymerisat $A_2$ gewinnt.
3. Verwendung der Formmasse nach Anspruch 1 zur Herstellung von geformten Gebilden.
4. Geformte Gebilde, hergestellt aus Formmassen gemäß Anspruch 1.

**Claims**

1. A thermoplastic molding composition consisting of
A an impact-resistant resin composed of
$A_1$ at least one copolymer in a proportion of from 40 to 90 % by weight, based on A, of styrene and/or α-methylstyrene with acrylonitrile, this copolymer containing from 20 to 40 % by weight of acrylonitrile in copolymerized form, and
$A_2$ at least one graft copolymer in a proportion of from 60 to 10 % by weight, based on A, which contains styrene and acrylonitrile in a weight ratio of from 80/20 to 65/35 grafted onto at least one rubber based only on butadiene, the rubber content being from 30 to 95 % by weight, based on $A_2$, and
B an acrylonitrile- and butadiene-based rubber in a proportion of from 1 to 20 parts by weight, based on 100 parts by weight of A, composed of from 5 to 40 % by weight of acrylonitrile and from 95 to 60 % by weight of butadiene, each based on B, and optionally containing
C customary additives,
wherein the graft copolymer $A_2$ is obtainable from at least one polybutadiene latex obtained in the form of an emulsion,
of which a first part, $A_{21}$,
which accounts for from 40 to 90 % by weight, based on the solids content of the total latex, is present in agglomerated form,
so that
from 70 to 97 % of the particles (number average) have an average particle size ($d_{50}$ value of the cumulative weight distribution) of from 0.04 to 0.08 μm,
and
from 30 to 3 % of the particles (number average) have an average particle size ($d_{50}$ value of the cumulative weight distribution) of from 0.20 to 0.50 μm,
and separately therefrom
a second part of a non-agglomerated latex $A_{22}$, which accounts for from 60 to 10 % by weight of the solids, based on the solids content of the total latex, are each emulsion polymerized (grafted) in a conventional manner with a monomer mixture of styrene and acrylonitrile
so that therafter latex
$A_{21}$ has a degree of grafting of from 25 to 70
and latex
$A_{22}$ has a degree of grafting of from 5 to 20
and thereafter latices $A_{21}$ and $A_{22}$ are mixed and graft copolymer $A_2$ is isolated in a conventional manner from the mixture of the latices.
2. A thermoplastic molding composition consisting of
A an impact-resistant resin composed of
$A_1$ at least one copolymer in a proportion of from 40 to 90 % by weight, based on A, of styrene and/or α-methylstyrene with acrylonitrile, this copolymer containing from 20 to 40 % by weight of acrylonitrile in copolymerized form, and
$A_2$ at least one graft copolymer in a proportion of from 60 to 10 % by weight, based on A, which contains styrene and acrylonitrile in a weight ratio of from 80/20 to 65/35 grafted onto at least one rubber based only on butadiene, the rubber content being from 60 to 80 % by weight, based on $A_2$,
and
B an acrylonitrile- and butadiene-based rubber in a proportion of from 1 to 20 parts by weight, based on 100 parts by weight of A, composed of from 5 to 40 % by weight of acrylonitrile and from 95 to 60 % by weight of butadiene, each based on B, and optionally containing
C customary additives,
wherein the graft copolymer $A_2$ is obtained from at least one polybutadiene latex obtained in the form of an emulsion,
of which a first part, $A_{21}$,
which accounts for from 50 to 70 % by weight of the solids, based on the solids content of the total latex, is present in agglomerated form,

8

so that

from 70 to 97 % of the particles (number average) have an average particle size (d$_{50}$ value of the cumulative weight distribution) of from 0.04 to 0.08 µm

and

from 30 to 3 % of the particles (number average) have an average particle size (d$_{50}$ value of the cumulative weight distribution) of from 0.20 to 0.50 µm,

and separately therefrom

a second part of a non-agglomerated latex A$_{22}$,

which contains from 50 to 30 % by weight of the solids, based on the solids content of the total latex, are each emulsion polymerized (grafted) in a conventional manner with a monomer mixture of styrene and acrylonitrile

so that thereafter latex

A$_{21}$ has a degree of grafting of from 25 to 70

and latex

A$_{22}$ has a degree of grafting of from 5 to 20

and thereafter latices A$_{21}$ and A$_{22}$ are mixed and graft copolymer A$_2$ is isolated in a conventional manner from the mixture of the latices.

3. The use of the molding composition as claimed in claim 1 for producing a shaped structure.

4. A shaped structure produced from a molding composition as claimed in claim 1.


**Revendications**

1. Matière à mouler thermoplastique, composée de:

A une résine résistant à chocs, constituée de

A$_1$ au moins un copolymère du styrène et(ou) de l'α-méthyl-styrène et d'acrylonitrile, copolymérisé en une proportion de 20 a 40 % en poids, dans une proportion de 40 à 90 % en poids par rapport à A, et de

A$_2$ au moins un copolymère de greffage, dans lequel du styrène et de l'acrylonitrile, dans un rapport pondéral de 80 : 20 à 65 : 35, sont greffés sur au moins un caoutchouc constitué uniquement de butadiène, la teneur en caoutchouc étant de 30 à 95 % du poids de A$_2$, dans une proportion de 60 à 10 % en poids par rapport à A, et

B un caoutchouc à base d'acrylonitrile et de butadiène avec 5 à 40 % en poids d'acrylonitrile et 95 à 60 % en poids, chaque fois par rapport à B, de butadiène, en une proportion de 1 à 20 parties en poids pour 100 parties en poids de A,

et contenant éventuellement

C des additifs usuels,

caractérisée en ce que le copolymère de greffage A$_2$ est obtenu à partir d'au moins un latex de polybutadiène,

préparé en émulsion,

dont une première partie A$_{21}$, qui constitue entre 40 et 90 % en poids par rapport à la matière solide du latex total, est présente sous une forme agglomérée, 70 à 97 % des particules possédant une granulométrie moyenne (moyenne en nombre) (valeur d$_{50}$ de la répartition intégrale des masses) comprise entre 0,04 et 0,08 µm et

30 à 3 % des particules possédant une granulométrie moyenne (moyenne en nombre) (valeur d$_{50}$ de la répartition intégrale des masses) comprise entre 0,20 et 0,50 µm,

et séparée d'une deuxième partie A$_{22}$ d'un latex non aggloméré, qui constitue 60 à 10 % en poids de la matière solide par rapport à la matière solide du latex total, qui sont polymérisées en émulsion, de manière connue en soi, avec (greffées sur) un mélange des monomères styrène et acrylonitrile

jusqu'à obtenir

un latex A$_{21}$ avec un degré de greffage de 25 à 70 et

un latex A$_{22}$ avec un degré de greffage de 5 à 20,

les deux latex A$_{21}$ et A$_{22}$ étant ensuite mélangés et le copolymère greffé A$_2$ préparé de manière usuelle.

2. Matière à mouler thermoplastique, composée de:

A une résine résistant aux chocs, constituée de

A$_1$ au moins un copolymère du styrène et (ou) de l'α-méthyl-styrène et d'acrylonitrile, copolymérisé en une proportion de 20 à 40 % en poids, dans une proportion de 40 à 90 % en poids par rapport à A,

et de

A$_2$ au moins un copolymère de greffage, dans lequel du styrène et de l'acrylonitrile, dans un rapport pondéral de 80 : 20 à 65 : 35, sont greffés sur au moins un caoutchouc constitué uniquement de butadiène, la teneur en caoutchouc étant de 60 à 80 % du poids de A$_2$, dans une proportion de 60 à 10 % en poids par rapport à A, et

B un caoutchouc à base d'acrylonitrile et de butadiène avec 5 à 40 % en poids d'acrylonitrile et 95 à 60 % en poids, chaque fois par rapport à B, de butadiène, en une proportion de 1 à 20 parties en poids pour 100 parties en poids de A,

et contenant éventuellement

C des additifs usuels,

caractérisée en ce que le copolymère de greffage $A_2$ est obtenu à partir d'au moins un latex de polybutadiène, préparé en émulsion,

dont une première partie $A_{21}$, qui forme 50 à 70 % en poids de matière solide par rapport à la matière solide du latex total, est présente sous une forme agglomérée,

70 à 97 % des particules possédant une granulométrie moyenne (moyenne en nombre) (valeur $d_{50}$ de la répartition intégrale des masses) comprise entre 0,04 et 0,08 µm et

30 à 3 % des particules possédant une granulométrie moyenne (moyenne en nombre) (valeur $d_{50}$ de la répartition intégrale des masses) comprise entre 0,20 et 0,50 µm,

et séparée d'une deuxième partie $A_{22}$ d'un latex non aggloméré, qui constitue 50 à 30 % en poids de la matière solide par rapport à la matière solide du latex total, qui sont polymérisées en émulsion, de manière connue en soi, avec (greffées sur) un mélange des monomères styrène et acrylonitrile

jusqu'à obtenir

un latex $A_{21}$ avec un degré de greffage de 25 à 70 et

un latex $A_{22}$ avec un degré de greffage de 5 à 20,

les deux latex $A_{21}$ et $A_{22}$ étant ensuite mélangés et le copolymère greffé $A_2$ préparé de manière usuelle.

3. Utilisation d'une matière à mouler suivant la revendication 1 pour la production de pièces façonnées.

4. Pièces façonnées, produites à partir de matières à mouler selon la revendication 1.